(19) Europäisches Patentamt
European Patent Office
Office européen des brevets

(11) **EP 2 893 268 B1**

(12) **EUROPÄISCHE PATENTSCHRIFT**

(45) Veröffentlichungstag und Bekanntmachung des Hinweises auf die Patenterteilung:
**15.03.2017 Patentblatt 2017/11**

(21) Anmeldenummer: **13756121.3**

(22) Anmeldetag: **29.08.2013**

(51) Int Cl.:
*F24J 2/52* *(2006.01)*        *F24J 2/14* *(2006.01)*

(86) Internationale Anmeldenummer:
**PCT/EP2013/067879**

(87) Internationale Veröffentlichungsnummer:
**WO 2014/037272 (13.03.2014 Gazette 2014/11)**

(54) **HALTEVORRICHTUNG**

HOLDING DEVICE

DISPOSITIF DE SUPPORT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.09.2012 AT 9852012**

(43) Veröffentlichungstag der Anmeldung:
**15.07.2015 Patentblatt 2015/29**

(73) Patentinhaber: **Solabolic GmbH**
**1100 Wien (AT)**

(72) Erfinder: **Adel, Ahmed**
**1100 Wien (AT)**

(74) Vertreter: **Puchberger & Partner Patentanwälte**
**Reichsratsstraße 13**
**1010 Wien (AT)**

(56) Entgegenhaltungen:
WO-A1-2011/059062      CA-A- 662 032
KR-B1- 101 004 108      US-A- 3 211 163

**Beschreibung**

Die Erfindung betrifft eine Vorrichtung zum Halterung eines Materials, beispielsweise zur Halterung eines Reflektors eines Parabolspiegels oder eines Parabolrinnenkollektors, sowie Verfahren zur Halterung derartiger Materialien.

Parabolrinnenkollektoren sind parabolisch geformte Solarrinnen, die die direkte Sonnenstrahlung auf eine sogenannte Brennlinie konzentrieren, in der ein Absorberrohr oder ein Photovoltaik-Modul angebracht ist. Je höher die Konzentration auf den Brennpunkt, um so besser ist die Energieausbeute und der Wirkungsgrad der Vorrichtung. Hohe Konzentration kann durch Parabolkollektoren erreicht werden, die eine große Apertur und hohe optische Präzision aufweisen.

Bei der Erhöhung der Apertur eines Parabolrinnenkollektors tritt jedoch das Problem erhöhter Windlasten auf, welche dazu führen, dass sich der Parabolspiegel bewegt oder schwingt und Fokusabweichungen auftreten. Aus diesem Grund ist in den meisten bekannten Parabolrinnenkollektoren die Apertur auf einen Wert von 7,51m beschränkt, und es ist eine aufwändige Haltekonstruktion erforderlich, um Fokusabweichungen bei Windlasten zu vermeiden und die optische Präzision zu erhalten. Die Haltekonstruktion ist der hauptsächliche Kostentreiber bei derartigen Parabolrinnenkollektoren. Es bestehen derzeit beträchtliche Bemühungen, das Problem der Windlasten bei Parabolrinnenkollektoren durch entsprechend ausgeformte Haltevorrichtungen in den Griff zu bekommen. Darüber hinaus ist es mit den verfügbaren Konstruktionen schwierig, vor Ort eine präzise parabolische Form zu erzeugen.

Außerdem führt bei den üblichen Konstruktionen jede Beschädigung der Haltevorrichtung dazu, dass möglicherweise der gesamte Kollektor, nämlich reflektierende Komponenten und Haltekonstruktion, Schaden nimmt und ausgetauscht werden muss.

Schließlich ist auch die Lieferung gewöhnlicher Konzentratoren auf Grund des Gewichts und der Abmessungen der Haltekonstruktion und der reflektierenden Materialien teuer und aufwändig.

Die bekannten Versionen der Parabolrinnen haben entweder fast exakte parabolische Form aber unflexible Parameter (mit Parametern sind hier die Apertur und Brennweite gemeint), oder leicht flexible Parameter, aber keine exakte parabolische Form (z. B. aufblasbare Konzentratoren). Auf der anderen Seite sind die Konzentratoren mit leicht flexiblen Parametern (z. B. aufblasbare Konzentratoren) in der Regel nicht robust genug, um den widrigen Wetterumständen standzuhalten, und halten den geforderten Belastungen nicht immer stand.

Ein Beispiel derartiger Vorrichtungen aus dem Stand der Technik findet sich in der US 2010314509 A1, sowie in der WO 2011059062 A1. In den beiden Erfindungen spielt jedoch weder die Sicherstellung der optischen Präzision noch die Verstellbarkeit der Parameter eine Rolle, da es sich nicht um Solarkonzentratoren handelt.

Eine ähnliche Haltevorrichtung ist aus der KR 101 004 108 B1 bekannt. Weitere gattungsgemäße Haltevorrichtungen sind in den Druckschriften CA 662 032 A und US 3 211 163 A gezeigt.

Der Erfindung liegt einerseits die Aufgabe zugrunde, eine Vorrichtung zur Halterung eines Parabolspiegels zu schaffen, die Fokusabweichungen aufgrund der Windlasten verhindert, wodurch gleichzeitig wesentlich größere Aperturen erreicht werden können. Andererseits sollen Materialanforderungen, Produktionskosten, Wartungskosten und Lieferkosten möglichst gering gehalten werden, um die Kosten der mit der Vorrichtung erzeugten Elektrizität gering zu halten. Darüber hinaus besteht die Aufgabe, eine Vorrichtung zu schaffen, bei der es möglich ist, die Öffnungsweite und die Brennweite des Kollektors vor Ort einzustellen und zu adjustieren.

Dies wird erfindungsgemäß durch eine Vorrichtung gemäß Anspruch 1 und ein Verfahren gemäß Anspruch 13 erreicht. Die Ansprüche 2-12, 14 und 15 beschreiben weitere vorteilhafte Ausführungen der Erfindung.

Bei der Vorrichtung gemäß Anspruch 1 wird in einfacher Weise eine bestimmte Form des Spannelements und damit des zu haltenden Materials erreicht. Beispielsweise und besonders vorteilhaft kann, wenn die Abstände zwischen den Zugmitteln gleich und die auf die Zugmittel aufgebrachten Zugkräfte identisch sind, in einfachster Weise eine parabolische Form erreicht werden. Die parabolische Form wird in diesem Fall durch die Zugkräfte an den Zugmitteln erreicht, ohne dass teure konstruktive Maßnahmen erforderlich werden.

Die zu erwartende Abweichung von der exakten parabolischen Form bei auftretenden Windlasten ist direkt abhängig von der Vorspannung im Spannelement. Somit kann die bei Belastung auftretende Abweichung von der Idealform durch eine höhere Vorspannung im Spannelement verringert werden. Es wird also bei der Auslegung der Vorrichtung die Vorspannung definiert, die die maximal zulässige Abweichung von der Idealform ergibt.

Im Gegensatz zu den herkömmlichen Kollektoren tragen die Zugmittel das Material entlang seiner gesamten Länge, und die auftretenden Windlasten werden in Form von Axialkräften auf das Unterteil abgeleitet, und treffen nicht auf das zu haltende Material, beispielsweise den Reflektor. Dadurch werden Biegeverformungen des Reflektors und Fokusabweichungen verhindert, wobei gleichzeitig die Materialanforderungen reduziert werden und sowohl Montage- als auch Wartungskosten sinken. Ohne Biegeverformung werden die Verschiebungen am Ende des Tragarms wesentlich verringert und somit können für vergleichbare zulässige Gesamtverformungen wesentlich größere Aperturen erreicht werden.

Durch die im folgenden gezeigte spezielle Ausführung mit verstellbarer Brennweite und verstellbarer Apertur ist die erfindungsgemäße Vorrichtung besonders für Forschungszwecke geeignet.

Die Erfindung ist nicht auf Parabolspiegel beschränkt, sondern es ist auch vorgesehen, durch eine andere Anordnung der Zugmittel oder eine andere Verteilung der Zugkräfte eine andere Form des zu haltenden Materials zu erreichen.

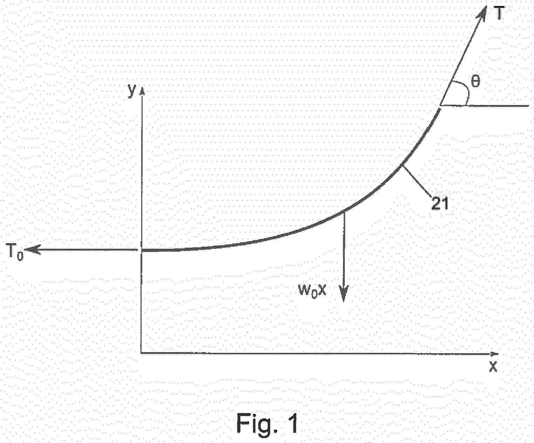

Der mathematische Beweis für die Bildung der parabolischen Form des Spannelements und damit des aufzuspannenden Materials wird im Folgenden an Hand der Fig 1 dargestellt.

Fig. 1 zeigt einen Abschnitt des Spannelements im eingespannten Zustand mit den darauf wirkenden Kräften. Das Symbol $w_0$ bezeichnet die nach unten wirkende und gleichmäßig verteile Kraft pro Längeneinheit, und $w_0x$ die nach unten wirkende Kraft auf diesen Abschnitt des Spannelements.

Das Symbol $T_0$ bezeichnet die tangential und horizontal wirkende Kraft auf den niedrigsten Punkt des Spannelements, und $T$ die tangential wirkende Kraft.

Das Spannelement ist als statisch angenommen, sodass die Summe der horizontalen und vertikalen Kräften Null sein muss. Dies führt zu den Gleichungen $T.\sin\theta = w_0x$ und $T.\cos\theta = T_0$. Somit erhält man

$$\tan(\theta) = \frac{w_0 x}{T_0}$$

$$\frac{dy}{dx} = \frac{w_0}{T_0} x = ax$$

wobei

$$y = \frac{ax^2}{2} + C$$

Somit ist die durch das Spannelement gebildete Kurve $y(x)$ eine Parabel.

Ein Vorteil der Erfindung besteht darin, dass die Summe der auf das Spannelement ausgeübten Zugkräfte in der Regel höher ist, als die auf das aufgespannte flexible Material ausgeübten Windlasten. Dadurch sind die Windlasten vernachlässigbar und führen nicht zu einer Verbiegung oder Verformung des Materials.

Darüber hinaus werden bei der erfindungsgemäßen Vorrichtung sämtliche Windlasten über das Spannelement und die Zugmittel auf die Angriffspunkte umgeleitet. Bei Verwendung von Tragarmen, an denen die Angriffspunkte angeordnet sind, und entsprechender Ausformung der Tragarme, beispielsweise unter Bildung eines stumpfen Winkels, wobei die Tragarme möglichst der Form des Spannelements folgt, kann erreicht werden, dass die Windkräfte in Form von axialen Kräften auf die Tragarme umgeleitet werden. Dadurch kommt es nicht zu einer Verbiegung oder Verformung des Materials.

Ein weiterer Vorteil der Erfindung besteht darin, dass das zu haltende Material an wesentlich mehr Punkten gehalten werden kann, als dies in der Regel der Fall ist. Dadurch können günstigere Spiegelsegmente eingesetzt werden, ohne die Notwendigkeit, Spiegel mit sehr guten Biegeeigenschaften einzusetzen. Meistens wird nämlich bei starren Konstruktionen der Parabolspiegel nur an vier bis sechs Punkten an der Unterkonstruktion befestigt, dadurch werden diese Befestigungspunkte bei Windlast stark beansprucht. Im Rahmen der vorliegenden Erfindung können wesentlich mehr Verbindungspunkte der Zugmittel mit dem Spannelement vorgesehen werden, was höhere Stabilität bringt.

Auch kann das zu haltende Material leicht von der Unterkonstruktion gelöst werden, da zu diesem Zweck lediglich die Zugkräfte entfernt und die Zugmittel gelockert werden müssen. Dies erlaubt eine einfache und schnelle Demontage der Vorrichtung. Das flexible Design ermöglicht auch alle möglichen Anpassungen in der Betriebs- und Instandhaltungsphase mit wenigen Schritten durchzuführen.

Die erfindungsgemäß vorgesehe Verwendung flexibler Materialien erlaubt die einfache Versendung dieser Materialien in Form von zusammengelegten Paketen, wobei die Materialien vor Ort auf den Unterteil aufgebracht und gespannt werden.

Die Materialien können auch schon in der Fabrik auf die Spannelemente und die Zugmittel befestigt werden, damit die parabolische Form vor Ort nur durch Ausüben der Zugkräfte erzielt wird.

Erfindungsgemäß ist vorgesehen, dass die Längen der Zugmittel zum Erzielen der nötigen optischen Präzision bei der Montage oder in der Betriebs- und Instandhaltungsphase verstellt werden können. Dies dient im Fall einer ungenauen Bearbeitung bei der Produktion (wenn etwa die Zugmittel zu kurz oder zu lang sind) dazu, dass trotzdem vor Ort eine exakte parabolische Form durch Feineinstellung der Längen der Zugmittel erzielt werden kann.

Einer der wesentlichsten Vorteile der Erfindung besteht darin, dass durch die erfindungsgemäße Vorrichtung jede beliebige Form des zu haltenden Materials einstellbar und in kürzester Zeit änderbar ist. So kann beispielsweise bei einer parabolischen Form die Apertur durch Verschieben der Angriffspunkte, und die Brennweite durch Verkürzen oder Verlängern des Spannelements eingestellt werden. Die Erfindung beschränkt sich jedoch nicht auf eine parabolische Form.

Erfindungsgemäß kann vorgesehen sein, dass das Unterteil zumindest zwei Tragarme umfasst, deren Enden die Angriffspunkte bilden oder aufweisen. Dadurch werden Windlasten auf axiale Kräfte in den Tragarmen umgeleitet, die leichter an die Unterkonstruktion ableitbar sind.

An dem Unterteil oder auch auf den Tragarmen können Steher, insbesondere Pylone angeordnet sein, deren Enden die Angriffspunkte bilden oder diese aufweisen. Die Pylone müssen nicht notwendig senkrecht angeordnet sein, sondern können auch winkelig, beispielsweise V-förmig, angeordnet sein.

Das Spannelement kann ein Kabel, einen Draht, ein Seil, eine Kette oder ein flexibles Blech umfassen oder durch ein derartiges Element gebildet sein. Die Zugmittel können zur Justierung der optischen Präzision der Vorrichtung in Ihrer Länge verstellbar sein. Die Zugmittel können beispielsweise in Form von Stäben, Seilen, Ketten, oder Federn, insbesondere elastischen Federn, ausgeführt sein oder diese umfassen.

Es ist ebenfalls erfindungsgemäß vorgesehen, dass ein oder mehrere Spannelemente lediglich in Form einer Schraube, eines Spannschlosses, Klebstoffs oder einer Schweißnaht am Spannelement angebracht sind. Das Zugmittel kann auch ein Teil des Spannelements sein.

Das zu haltende Material kann flexibles Material umfassen und/oder in Form von mehreren, voneinander getrennten oder miteinander schwenkbar verbundenen Materialsegmenten ausgeführt sein. Das Material und/oder die Materialsegmente können reflektierendes Material, insbesondere ein oder mehrere Spiegelsegmente oder Reflektorsegmente umfassen.

Als zu haltendes Material kann auch ein starres Material vorgesehen sein, beispielsweise ein Glasspiegel. In diesem Fall ist die exakt parabolische Form des Spannelements essentiell, damit der Glasspiegel spannungsfrei gehalten werden kann.

Die Zugmittel können im Wesentlichen senkrecht angeordnet sein. Die horizontalen Abstände der Zugmittel können zueinander im Wesentlichen identisch sein, und die Zugkraft auf jedes Zugmittel kann im Wesentlichen identisch sein. Dadurch wird erreicht, dass das Spannelement eine parabolische Form annimmt.

Es kann zumindest ein Träger vorgesehen sein, wobei jedes Zugmittel mit dem Träger verbunden ist. Das Spannelement kann mit dem Träger zumindest an einem Punkt über eine Schraube, ein Spannschlosses, eine Schweißnaht oder eine Klebstoffschicht verbunden sein. Bei dem Träger kann es sich um ein beliebiges strukturelles Element handeln, welches zur Befestigung der Zugmittel geeignet ist.

Der Träger kann vorzugsweise beweglich sein, wodurch jedes Zugmittel durch den Träger mit einer Zugkraft beaufschlagbar ist. Der Träger kann in Bezug auf das Unterteil derart geführt sein, dass bei einer Bewegung des Trägers in Richtung des Unterteils eine für jedes Zugmittel identische Zugkraft auf die Zugmittel ausgeübt wird.

Es können mehrere Träger vorgesehen sein, die über ein Verbindungselement, insbesondere eine Längsstrebe, verbunden und gemeinsam in Bewegung setzbar sein können.

Dadurch wird ermöglicht, eine Rinnenstruktur, insbesondere einen Rinnenkollektor zu schaffen, der mehrere parallel verlaufende Spannelemente aufweist, die über parallel angeordnete Träger gespannt werden, wobei alle Träger gemeinsam mit einer Längsstrebe in Bewegung gesetzt werden.

Alternativ ist erfindungsgemäß auch vorgesehen, dass die Träger ohne Verwendung einer Längsstrebe individuell in Richtung des Unterteils mit einer Spannvorrichtung ziehbar sind.

Die Träger können auch starr ausgeführt sein, wobei die Zugkräfte auf die Zugmittel durch Verstellen der Längen der Spannelemente, etwa durch Spannschlösser, oder der Längen der Zugmittel ausgeübt werden.

Die Zugmittel können durch Teilabschnitte eines länglichen, biegsamen Zugstrangs gebildet sein, wobei zur beweglichen Lagerung des Zugstrangs Umlenkpunkte, insbesondere Umlenkrollen, am Spannelement und am Träger vorgesehen sind, und der Zugstrang alternierend durch die Umlenkpunkte am Spannelement und am Träger geführt ist. Dabei können die Horizontalprojektionen der Abstände der Umlenkpunkte entlang des Spannelements im Wesentlichen identisch sein.

Die Vorrichtung kann vorzugsweise als Parabolspiegel, Parabolkollektor oder Parabolrinnenkollektor ausgeführt sein.

Die Vorrichtung kann mit einem Nachführsystem ausgestattet sein, um der Bewegung der Sonne zu folgen.

Der Abstand der Angriffspunkte zueinander kann verstellbar sein, beispielsweise indem die Angriffspunkte auf Tragarmen angebracht sind und die Tragarme relativ zum Unterteil symmetrisch verschiebbar sind. Weiters kann die Länge des Zugmittels zwischen den Angriffspunkten verstellbar sein. Das Spannelement kann auch als umlaufendes Element, insbesondere umlaufendes Seil ausgeführt sein.

Die Erfindung umfasst ferner Verfahren zur Halterung eines Materials, zur Einstellung der Apertur und zur Einstellung der Brennweite sowie zur Justierung einer erfindungsgemäßen Vorrichtung.

Das erfindungsgemäße Verfahren zur Halterung eines Materials umfasst die folgenden Verfahrensschritte:

Zunächst wird ein längliches, biegeschlaffes Spannelement, welches mit dem zu halternden Material verbunden ist, es umfasst oder trägt, zwischen zumindest zwei Angriffspunkten eines Unterteils angebracht.

Danach wird an, an dem Spannelement angebrachten, Zugmitteln in Richtung des Unterteils mit identischer oder unterschiedlicher Zugkraft derart gezogen, dass das Spannelement eine vorbestimmte Form, beispielsweise eine parabolische Form annimmt.

Wenn das zu haltende Material ein flexibles Material umfasst und/oder in Form von mehreren, voneinander getrennten oder miteinander schwenkbar verbundenen Materialsegmenten ausgeführt ist, kann eine Apertur und/oder eine Brennweite des Materials angepasst werden. Zur Einstellung einer Apertur des Materials können die Angriffspunkte symmetrisch zum Unterteil, beispielsweise in horizontaler Richtung, verschoben werden. Zur Einstellung einer Brennweite des Materials kann die Länge des Spannelements zwischen den Angriffspunkten erhöht oder vermindert werden.

Erfindungsgemäß ist, auch wenn das Material nicht flexibel, sondern starr ist, vorgesehen, dass zur Justierung der Vorrichtung die Längen der Zugmittel verstellt werden. Dies ermöglicht im Falle von Bearbeitungsungenauigkeiten bei der Produktion, wenn etwa die Zugmittel zu kurz oder zu lang sind, trotzdem eine perfekte, beispielsweise parabolische Form bei der Montage zu erreichen.

Weitere vorteilhafte Ausgestaltungen ergeben sich aus den Ansprüchen, der Beschreibung und den Figuren.

Die Erfindung wird nun anhand von Ausführungsbeispielen in den folgenden Zeichnungen näher erläutert.

> Fig.1 zeigt eine schematische Darstellung zur Erklärung des Wirkprinzips;
> Fig. 2a - 2g zeigen verschiedene Ausführungsformen der erfindungsgemäßen Vorrichtung;
> Fig.3 zeigt eine axonometrische Darstellung eines Parabolrinnenkollektors mit verstellbaren Parametern;
> Fig. 4 zeigt eine Seitenansicht des in Fig.3 dargestellten Parabolrinnenkollektors;
> Fig. 5 zeigt eine axonometrische Darstellung einer in Fig.3 und Fig.4 dargestellten Verbindung zwischen einem Zugmittel und einem Träger;
> Fig. 6 zeigt eine axonometrische Darstellung eines Pylons des in Fig.3 und Fig.4 dargestellten Parabolrinnenkollektors.

In den schematischen Zeichnungen ist jeweils ein erforderliches Absorberrohr oder ein Photovoltaik-Modul aus Gründen der Vereinfachung nicht dargestellt.

Fig. 1 zeigt einen Abschnitt des Spannelements 21 im eingespannten Zustand mit den darauf wirkenden Kräften.

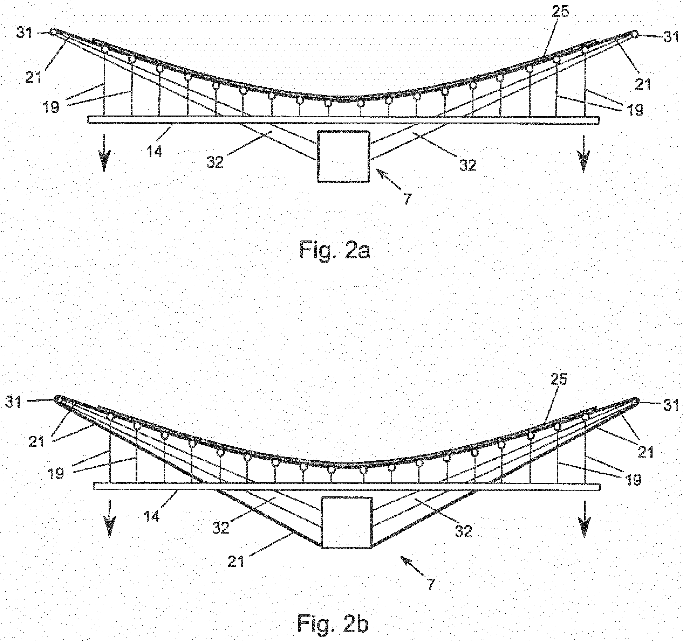

Fig. 2a zeigt eine erste Ausführungsform der Erfindung. Ein Unterteil 7 verfügt über Tragarme 32, die in einem stumpfen Winkel zueinander angeordnet sind und deren Querschnitt vom Unterteil 7 zu ihren Enden hin abnimmt. An den Spitzen der Tragarme sind Angriffspunkte 31 vorgesehen. Dabei kann es sich um Befestigungspunkte oder Rollen handeln. Zwischen den Angriffspunkten ist ein Seil 21 gespannt.

Das Seil 21 trägt einen Reflektor 25, etwa in Form von miteinander beweglich verbundenen oder unverbundenen Spiegelsegmenten. Am Seil 21 sind Zugmittel 19 angebracht, die an ihren anderen Enden an einem Träger 14 befestigt sind. Die Zugmittel 19 sind in gleichen horizontalen Abständen zueinander angebracht. Wenn der Träger 14 nach unten gezogen wird, wie durch die Pfeile angedeutet ist, dann wird auf jedes Zugmittel die gleiche Kraft ausgeübt, und das Spannelement nimmt eine parabolische Form an.

Fig. 2b zeigt ein zweites Ausführungsbeispiel der erfindungsgemäßen Vorrichtung. In diesem Fall dienen die Angriffspunkte 31 nicht zur Fixierung, sondern zur Umlenkung des Seils 21. Das Seil 21 ist als umlaufendes Seil ausgeführt und führt um die Tragarme herum.

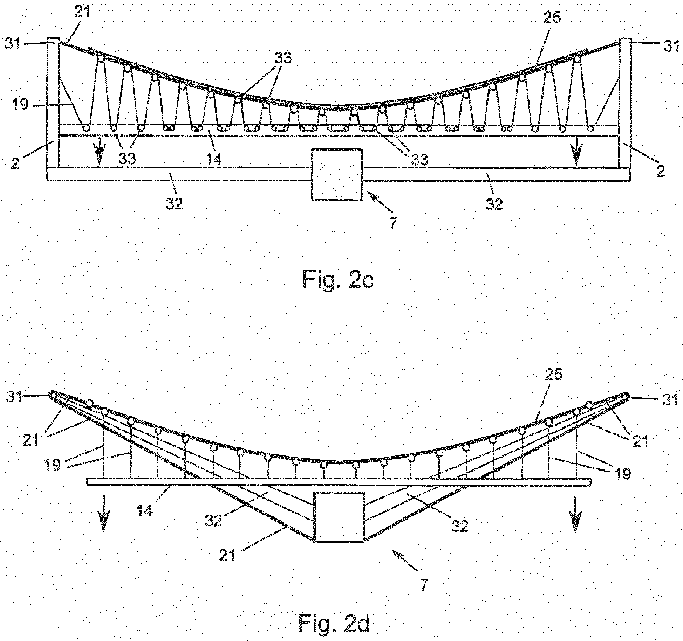

Fig. 2c zeigt ein weiteres Ausführungsbeispiel der Erfindung. In diesem Fall sind die Zugmittel durch Teilabschnitte eines länglichen, biegsamen Zugstrangs gebildet, wobei zur beweglichen Lagerung des Zugstrangs Umlenkrollen 33 am Seil 21 und am Träger 14 vorgesehen sind, und der Zugstrang alternierend durch die Umlenkpunkte am Spannelement und am Träger geführt ist.

Fig. 2d zeigt ein weiteres Ausführungsbeispiel der Erfindung. Das Ausführungsbeispiel entspricht jenem aus Fig. 2b, jedoch ist in diesem Fall der Reflektor 25 an seinen Enden mit dem Seil 21 verbunden. Die Zugmittel 19 greifen direkt am Reflektor 25, und nicht am Seil 21 an.

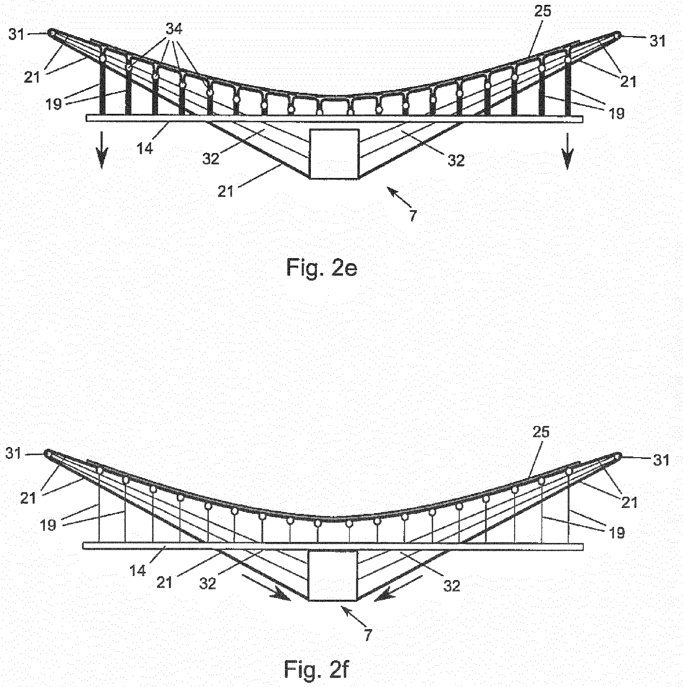

Fig. 2e zeigt ein weiteres Ausführungsbeispiel der Erfindung. Das Ausführungsbeispiel entspricht jenem aus Fig. 2b, jedoch sind in diesem Fall keine separaten Zugmittel vorgesehen, sondern das Seil 21 ist durch Klemmen 34, Schweißnähte oder dergleichen an vorbestimmten Positionen zusammengeklemmt, und am so abgeklemmten Teil direkt mit dem Träger 14 verbunden. Dadurch wirkt das Seil selbst als Zugmittel, und es sind keine separaten Zugmittel notwendig. Durch Bewegung des Trägers 14 wird auf die abgeklemmten Teile des Seiles 21 eine Zugkraft im Sinne der Erfindung ausgeübt, ohne dass separate Zugmittel benötigt werden.

Fig. 2f zeigt ein weiteres Ausführungsbeispiel der Erfindung. Das Ausführungsbeispiel entspricht jenem aus Fig. 2b, jedoch ist in diesem Fall der Träger 14 starr am Unterteil 7 befestigt. Das Seil 21 ist umlaufend angebracht und trägt den Reflektor 25. Zur Ausübung einer Spannkraft auf das Seil 21 (durch die Pfeile angedeutet) sind (nicht dargestellte) Spannvorrichtungen, beispielsweise Spannschlösser, am Seil 21 angeordnet. Dadurch kann auf einfache Weise eine durch die Zugmittel 19 vorbestimmte Form des Seiles 21 erreicht werden, ohne dass die Tragkonstruktion selbst verstellbar sein muss.

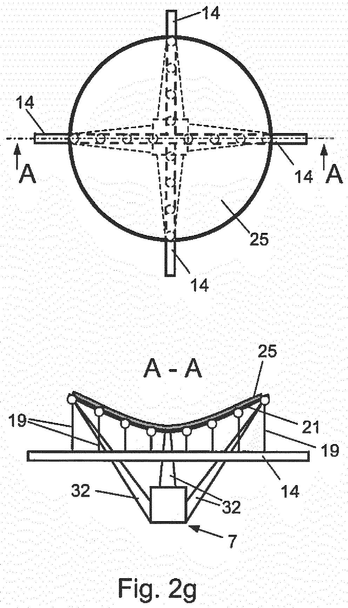

Fig. 2g zeigt ein weiteres Ausführungsbeispiel der Erfindung. Es ist ein Unterteil 7 mit vier, normal zueinander stehenden Tragarmen 32 vorgesehen. Die Tragarme 32 tragen zwei Seile 21, die über zwei zueinander normal ausgerichtete Träger 14 gespannt sind. Dadurch ergibt sich für den aufgespannten Reflektor 25 eine im wesentlichen parabolische Form. Die parabolische Form kann weiter verbessert werden, indem zusätzliche Tragarme bzw. Träger verwendet werden.

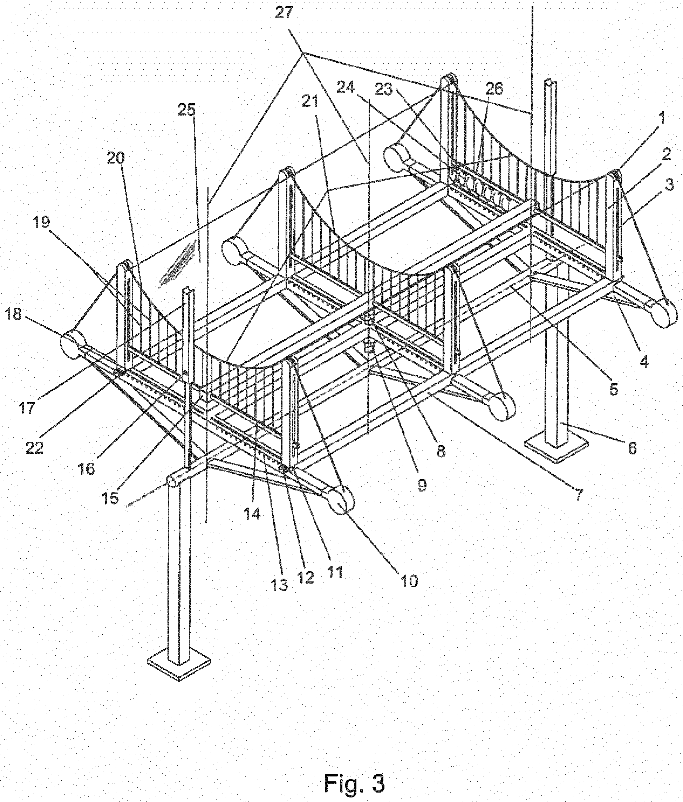

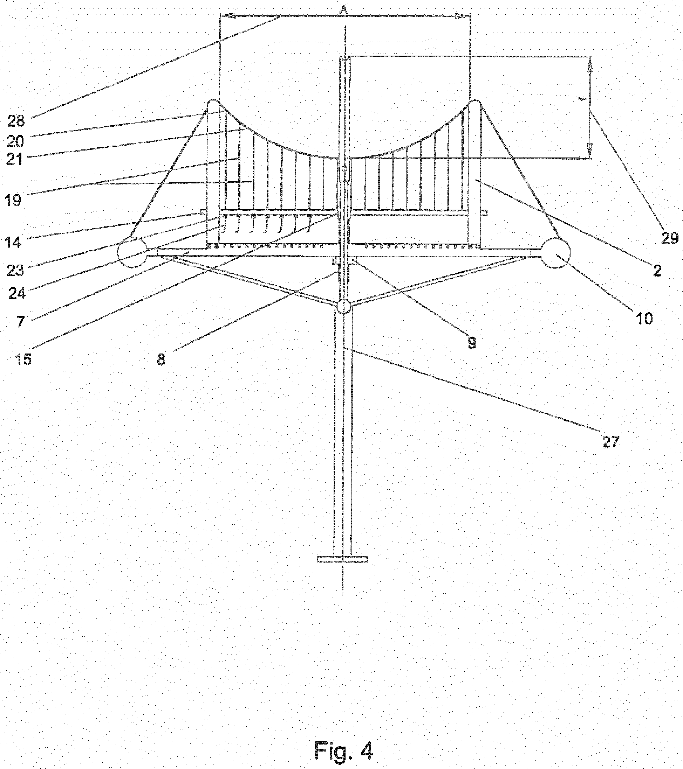

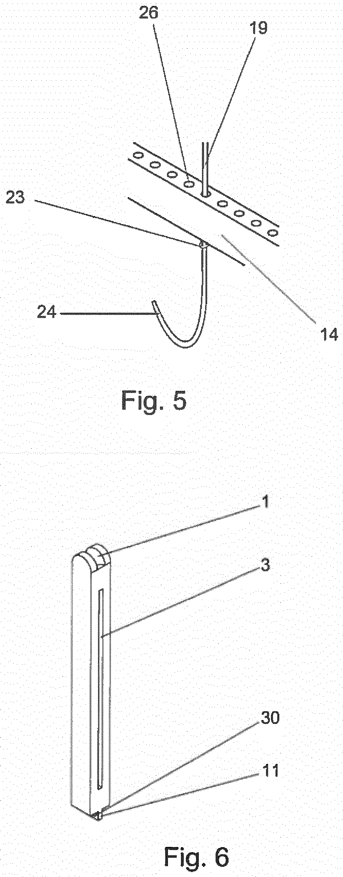

Figs. 3-6 zeigen ein weiteres, ausführlich dargestelltes Ausführungsbeispiel der Erfindung. Fig. 4 zeigt eine Seitenansicht des in Fig.3 dargestellten Parabolrinnenkollektors. Fig. 5 zeigt eine axonometrische Darstellung einer in Fig.3 und Fig.4 dargestellten Verbindung zwischen einem Zugmittel und einem Träger. Fig. 6 zeigt eine axonometrische Darstellung eines Pylons des in Fig. 3 und Fig.4 dargestellten Parabolrinnenkollektors.

Seile 21 sind zwischen Pylonen 2 auf kurvenförmigen Sätteln 1 eingehängt und bilden Parabeln, welche mittig verlaufende Symmetrieachsen 27 aufweisen.

Die parabolische Form der Seile wird durch Aufbringung einer Kraft bewirkt, die parallel zu den Symmetrieachsen der Parabeln 27 wirkt, und gleichmäßig entlang der Richtung senkrecht zu den Symmetrieachsen 27 verteilt ist.

Diese Kraft wird durch Zugmittel 19 ausgeübt, die die Seile 21 mit den Trägern 14 verbinden. Die Zugmittel sind parallel zu den Symmetrieachsen der Parabeln 27 ausgerichtet, und deren Zwischenabstände sind identisch. Alle Träger 14 sind mit einer normal zu den Symmetrieachsen der Parabeln 27 verlaufenden Längsstrebe 15 verbunden.

Die Längsstrebe 15 ist durch eine Gewindestange 8, die in der Mitte der verlaufenden Längsstrebe 15 angeschweißt ist, und eine Spannmutter 9 zu einem fixen Unterteil 7 mit einer größeren Kraft als der Gewichtskraft der Seile 21 und des reflektierenden Materials 25 und aller anderen wirkenden Kräfte wie z. B. die Windlasten, gezogen. Somit sind die Gewichte der Seile 21 und des reflektierenden Materials 25 und alle anderen wirkenden Kräfte vernachlässigbar klein.

Die Verbindung zwischen den Zugmitteln 19 und den Seilen 21 erfolgt durch Drahtseilklemmen 20.

Die Zugmittel 19 sind in den vertikalen Löchern 26 der Träger 14 symmetrisch um die Symmetrieachsen der Parabeln 27 eingefädelt, so dass die Abstände zwischen den Zugmitteln gleich sind.

Auf den Unterteilen 24 der Zugmittel 19, die sich unter den Trägern 14 befinden, sind Drahtseilklemmen 23 angeklammert, welche in Fig.4 besser zu erkennen sind. Die Abstände zwischen jedem Seil 21 und den auf den Zugmitteln angeklammerten Drahtseilklemmen 23 ergeben eine Parabel. Damit sind die ausgeübten Zugkräfte in allen einzelnen Zugmitteln 19 fast gleich, und die Seile 21 sind in eine parabolische Form gebracht.

Aus Gründen der Übersichtlichkeit sind nicht alle frei hängende Teile der Zugmittel, die sich unter den Trägern 14 befinden, und die darauf angeklammerten Drahtseilklemmen 23, in Fig.3 und Fig.4 eingezeichnet (nur für sieben Zugmittel 19 eingezeichnet). In Fig.3 sind sechs Pylonen 2, zwei Pylonen 2 für jedes Seil 21 dargestellt. Diese Pylonen 2 weisen an ihren Spitzen kurvenförmige Sättel 1 auf, auf denen die Seile 21 eingehängt sind. Diese Sättel 1 haben die Aufgabe fast alle Kräfte (inkl. die Windlasten), die auf den Parabolrinnenkollektor wirken, in Druckkräfte auf die Pylonen 2 umzuwandeln, somit können Materialkosten der Pylonen 2 und der statischen Unterkonstruktion eingespart werden.

Jeder Pylon 2 weist eine durchgehende Öffnung 3 auf, die zwei Funktionen hat,

- erstens, beim Ab- oder Festschrauben der Spannmutter 9, die Bewegung der verlaufenden Längsstrebe 15 mit den Trägern 14, die parallel zu den Symmetrieachsen der Parabeln 27 ist, zuzulassen,

- zweitens, beim Verstellen der Apertur 28 des Parabolrinnenkollektors werden die Pylonen 2 senkrecht zu den Symmetrieachsen der Parabeln 27 verschoben, was die durchgehende Öffnung 3 in beliebiger Höhe der Träger 14 ermöglicht.

Gemäß eines ersten Ausführungsbeispiels des erfindungsgemäßen Verfahrens sind die Apertur 28 und die Brennweite 29 des Parabolrinnenkollektors verstellbar, wobei darauf geachtet werden muss, dass man vor der Verstellung der Apertur 28 oder der Brennweite 29

a. den Parabolrinnenkollektor in die horizontale Stellung bringt, so dass die Pylonen 2 vertikal sind,
b. dann die lösbaren Verbindungen zwischen den Seilen 21 und den schmalen (flachen) Spiegelsegmenten oder dem biegsamen, reflektierenden Material 25 löst,
c. dann die Spiegelsegmente oder das biegsame, reflektierende Material 25 entfernt,
d. dann die Spannmutter 9 abschraubt, um die Zugkräfte der Zugmittel 19 und der Seile 21 zu entlasten,
e. dann die Drahtseilklemmen 20, die die Zugmittel 19 mit den Seilen 21 verbinden, abmontiert,
f. dann die Drahtseilklemmen 23, die auf den Teilen der Zugmittel 24, die sich unter den Trägern 14 befinden, angeklammert sind, abmontiert,
g. dann die Zugmittel 19 entfernt.

Die Apertur 28 kann beliebig verstellt werden, indem man

a. die Muttern 22, die auf den Gewindeenden der langen Stäbe 12 festgeschraubt sind, abschraubt und die Stäbe 12 herauszieht,
b. dann die Pylonen 2 horizontal und symmetrisch um die Symmetrieachsen der Parabeln 27 auf dem Unterteil 7 verschiebt. Um dieses Verschieben in beliebiger Höhe der Träger zu ermöglichen, weist jeder Pylon 2 eine Durchgehende Öffnung 3 auf. Alle Pylonen 2 auf einer der zwei Seiten der Seile 21 müssen um den gleichen Abstand und in die gleiche Richtung verschoben werden. Alle Pylonen 2, die sich auf einer der zwei Seiten der Seile 21 befinden, müssen um den gleichen Abstand und in die gleiche Richtung verschoben werden,
c. dann beim Erreichen der benötigten Apertur 28 lange Stäbe 12 in die Löcher 13 im Unterteil 7 und die zwei Löcher 30 in den Federn 11 der Pylonen 2 einschiebt, welche in Fig.4 zu erkennen sind. Somit haben die Pylonen 2 keinen Spielraum, um sich zu verschieben, da ihre Federn 11 perfekt in die Nuten 18 im Unterteil 7 passen,
d. dann die Stäbe 12 befestigt, indem man Muttern 22 auf ihren Gewindeenden festschraubt.

Die Brennweite 29 kann beliebig verstellt werden, indem man

a. die Seile 21 durch die auf beiden Seiten der Seile 21 befindlichen Rollen 10, die in Aufbau und Funktion wie Angelrollen ähnlich sind, einholt, wenn man die Brennweite 29 vergrößern will, oder in die Länge zieht, wenn man die Brennweite 29 verkleinern will. Man muss dafür sorgen, dass alle Längen der Seile 21 nach der Verstellung gleich sind,
b. dann die Seile 21 beim Erreichen der Länge, die die gewünschte Brennweite 29 ergibt, an den Sätteln 1 einhängt und diese Länge durch die Rollen 10, die auf dem Unterteil 7 befestigt sind, einstellt.

Nach der Verstellung der Apertur 28 oder der Brennweite 29 werden die Seile 21 wieder in eine parabolische Form gebracht und das reflektierende Material 25 wird auf den Seilen 21 befestigt, indem man

a. die Zugmittel 19 in die vertikalen Löcher 26 der Träger 14 symmetrisch um die Symmetrieachsen der Parabeln 27 einfädelt, so dass die Abstände zwischen den Zugmitteln gleich sind,
b. dann die oberen Enden der Zugmittel 19 durch Drahtseilklemmen 20 mit den Seilen 21 verbindet, so dass alle Zugmittel 19 vertikal sind. Diese Verbindungen müssen stark genug sein, um das Abgleiten der Zugmittel 19 auf den Seilen 21 zu verhindern,
c. dann auf den Teilen der Zugmittel 24, die sich unter den Trägern 14 befinden, Drahtseilklemmen 23 anklammert, so dass die Abstände zwischen jedem Seil 21 und den auf den Zugmitteln 19 angeklammerten Drahtseilklemmen 23 eine Parabel ergeben,
d. um die Gleichung der Parabel zu erhalten kann man die Abstände, wo die zwei Zugmittel 19 ganz links und ganz rechts mit dem Seil 21 verbunden sind, und den Abstand in der Mitte des Seils 21 zwischen dem Seil 21 und den Trägern 14 messen
e. dann die Spannmutter 9 mit einer größeren Kraft als das Gewicht der Seile 21 und des reflektierenden Materials 25 festschraubt. Somit sind die ausgeübten Zugkräfte in allen einzelnen Zugmitteln 19 fast gleich, und die Seile 21 werden in eine parabolische Form gebracht,
f. dann Spiegelsegmente oder biegsames, reflektierendes Material 25 auf den Seilen 21 mit lösbaren Verbindungen befestigt,
g. dann die Höhe des Absorberrohrs oder des Photovoltaik-Moduls durch die verstellbare Absorber-Halterung 17 verstellt, die aus zwei Profilelementen besteht von denen eines ins andere gleitet und ein Loch 16 mit innerem Gewinde aufweist, um die gewünschte Höhe durch Festdrehen einer Schraube einzustellen.

Die Länge des Parabolrinnenkollektors wird durch Anordnung der benötigten Anzahl von Seilen 21 entlang der Längsachse 5 kontrolliert. Dieser Parabolrinnenkollektor kann mit einem konventionellen Nachführsystem um eine oder zwei Achsen der Bewegung ausgestattet sein. Der Stellungswinkel spielt bei der parabolischen Form der Seile 21 keine Rolle, solang die Zugmittel 19 die Seile 21, mit einer größeren Kraft als das Gewicht der Seile 21 und des reflektierenden Materials 25 und alle anderen wirkenden Kräfte wie z.B. die Windlasten ziehen. Für die Nachführung um eine horizontale Achse kann die Längsachse 5 als die horizontale Achse des Nachführsystems verwendet werden, die mit dem Unterteil 7 durch Supporte 4 verbunden ist. Der ganze Parabolrinnenkollektor kann auf eine herkömmliche Aufständerung 6 angebracht werden.

Die Erfindung beschränkt sich nicht auf die dargestellten Ausführungsbeispiele sondern erstreckt sich auf sämtliche Ausführungen im Rahmen der nachfolgenden Patentansprüche.

Bezugszeichenliste:

| 1 | Sattel |
|---|---|
| 2 | Pylon |
| 3 | Öffnung |
| 4 | Support |
| 5 | Längsachse |
| 6 | Aufständerung |
| 7 | Unterteil |
| 8 | Gewindestange |
| 9 | Spannmutter |
| 10 | Rolle |
| 11 | Feder |
| 12 | Stab |
| 13 | Loch |
| 14 | Träger |
| 15 | Längsstrebe |
| 16 | Loch |
| 17 | Absorber-Halterung |
| 18 | Nut |
| 19 | Zugmittel |
| 20 | Drahtseilklemme |
| 21 | Seil |
| 22 | Mutter |
| 23 | Drahtseilklemme |
| 24 | Unterteile der Zugmittel |
| 25 | Reflektor |
| 26 | Loch |
| 27 | Symmetrieachse |
| 28 | Apertur |
| 29 | Brennweite |
| 30 | Loch |

| 31 | Angriffspunkt |
|----|---------------|
| 32 | Tragarm |
| 33 | Umlenkrollen |
| 34 | Klemmen |

## Patentansprüche

**1.** Vorrichtung zur Halterung eines Materials (25), umfassend

> a) ein Unterteil (7) umfassend zumindest zwei Angriffspunkte (31);
> b) zumindest ein längliches, biegeschlaffes Spannelement (21), das zwischen den Angriffspunkten (31) hängend angebracht ist,
> c) Zugmittel (19), die an dem Spannelement angebracht oder Teil des Spannelements sind,
> d) wobei das Spannelement mit dem Material (25) verbunden ist, es umfasst oder trägt, und
> e) die Vorrichtung derart ausgeführt ist, dass alle Zugmittel gleichzeitig mit identischer oder unterschiedlicher Zugkraft in Richtung des Unterteils (7) ziehbar sind,

wobei dass zumindest ein Träger (14) vorgesehen ist, wobei jedes Zugmittel (19) mit dem Träger verbunden ist.

**2.** Vorrichtung nach Anspruch 1, **dadurch gekennzeichnet, dass** das Unterteil (7) zumindest zwei Tragarme (32) umfasst, deren Enden die Angriffspunkte (31) bilden oder aufweisen und/oder dass an dem Unterteil (7) oder an den Tragarmen (32) Steher, insbesondere Pylone (2), angeordnet sind, deren Enden die Angriffspunkte (31) bilden oder aufweisen.

**3.** Vorrichtung nach einem der vorhergehenden Ansprüche, **dadurch gekennzeichnet, dass** das Spannelement (21) ein Kabel, einen Draht, ein Seil, eine Kette oder ein flexibles Blech umfasst und/oder das Spannelement (21) als umlaufendes Seil ausgeführt ist.

**4.** Vorrichtung nach einem der vorhergehenden Ansprüche, **dadurch gekennzeichnet, dass** die Zugmittel (19) und/oder das Spannelement in Ihrer Länge verstellbar sind und/oder die Zugmittel (19) Stäbe, Seile, Ketten oder elastische Federn umfassen oder in Form einer Schraube, eines Spannschlosses, einer Schweißnaht oder einer Klebstoffschicht ausgeführt sind.

**5.** Vorrichtung nach einem der vorhergehenden Ansprüche, **dadurch gekennzeichnet, dass** das Material (25) flexibles Material umfasst und/oder in Form von mehreren, voneinander getrennten oder miteinander schwenkbar verbundenen Materialsegmenten ausgeführt ist, wobei das Material (25) und/oder die Materialsegmente reflektierendes Material, insbesondere ein oder mehrere Spiegelsegmente umfassen.

**6.** Vorrichtung nach einem der vorhergehenden Ansprüche, **dadurch gekennzeichnet, dass** der Träger (14) starr, insbesondere starr am Unterteil (7) befestigt, ausgeführt ist, wobei die Länge der Spannelemente (21) oder die Länge der Zugmittel (19) verstellbar, insbesondere durch Spannschlösser, Federn oder durch Dehnung verstellbar, ist.

**7.** Vorrichtung nach einem der vorhergehenden Ansprüche, **dadurch gekennzeichnet, dass** die Zugmittel (19) derart, vorzugsweise im Wesentlichen senkrecht, angeordnet sind, dass die Zugkräfte im Wesentlichen senkrecht in Richtung des Unterteils (7) ausgeübt werden, und/oder dass die horizontalen Abstände der Zugmittel (19) zueinander im Wesentlichen identisch sind und/oder die Zugkraft auf jedes Zugmittel im Wesentlichen identisch ist.

**8.** Vorrichtung nach einem der Ansprüche 1 bis 5 oder 7, **dadurch gekennzeichnet, dass** der Träger (14) beweglich und jedes Zugmittel (19) durch den Träger mit einer Zugkraft beaufschlagbar ist.

**9.** Vorrichtung nach Anspruch 8, **dadurch gekennzeichnet, dass** der Träger (14) in Bezug auf das Unterteil (7) derart geführt ist, dass bei einer Bewegung des Trägers in Richtung des Unterteils eine für jedes Zugmittel (19) identische Zugkraft auf die Zugmittel ausgeübt wird.

**10.** Vorrichtung nach einem der vorhergehenden Ansprüche, **dadurch gekennzeichnet, dass** die Zugmittel (19) durch Teilabschnitte eines länglichen, biegsamen Zugstrangs gebildet sind, wobei zur beweglichen Lagerung des Zugstrangs Umlenkpunkte, insbesondere Umlenkrollen (33), am Spannelement (21) und am Träger (14) vorgesehen sind, und der Zugstrang alternierend durch die Umlenkpunkte am Spannelement und am Träger geführt ist, wobei vorzugsweise die Horizontalprojektionen der Abstände der Umlenkpunkte (33) entlang des Spannelements (21) im Wesentlichen identisch sind.

**11.** Vorrichtung nach einem der vorhergehenden Ansprüche, **dadurch gekennzeichnet, dass** die Vorrichtung als Parabolspiegel oder Parabolrinnenkollektor ausgeführt ist.

**12.** Vorrichtung nach einem der vorhergehenden Ansprüche, **dadurch gekennzeichnet, dass** der Abstand der Angriffspunkte (31) zueinander und/oder die Länge des Zugmittels zwischen den Angriffspunkten verstellbar ist.

13. Verfahren zur Halterung eines Materials (25), umfassend die folgenden Verfahrensschritte:

a) Anbringen eines länglichen, biegeschlaffen Spannelements (21), welches mit dem Material (25) verbunden ist, es umfasst oder trägt, zwischen zumindest zwei Angriffspunkten (31) eines Unterteils (7);
b) Ziehen von an dem Spannelement (21) angebrachten oder durch das Spannelement gebildeten Zugmitteln (19) in Richtung des Unterteils (7) mit identischer oder unterschiedlicher Zugkraft derart, dass das Spannelement (21) eine vorbestimmte, insbesondere parabolische Form annimmt, wobei jedes Zugmittel (19) mit einem Träger (14) verbunden ist.

14. Verfahren nach Anspruch 13, **dadurch gekennzeichnet, dass** zur Einstellung einer Öffnungsweite des Materials (25), welches flexibles Material umfasst und/oder in Form von mehreren, voneinander getrennten oder miteinander schwenkbar verbundenen Materialsegmenten ausgeführt ist, die Angriffspunkte (31) in vorzugsweise horizontaler Richtung symmetrisch zum Unterteil (7) verschoben werden.

15. Verfahren nach Anspruch 13, **dadurch gekennzeichnet, dass** zur Einstellung einer Brennweite des Materials (25), welches flexibles Material umfasst und/oder in Form von mehreren, voneinander getrennten oder miteinander schwenkbar verbundenen Materialsegmenten ausgeführt ist, die Länge des Spannelements (21) zwischen den Angriffspunkten (31) erhöht oder vermindert wird.

**Claims**

1. A device for holding a material (25), comprising:

(a) a lower part (7) comprising at least two engagement points (31),
(b) at least one elongated, flexible tensioning element (21) which is suspended between the two engagement points (31),
(c) tensioning means (19) which are attached to the tensioning element or are a part of the tensioning element,
(d) wherein the tensioning element is connected to, comprises or carries the material (25),
(e) the device is constructed so that all tensioning means can be simultaneously pulled in direction of the lower part (7) with identical or varying tensile force,

wherein at least one carrier (14) is provided, whereby each tensioning means (19) is connected to the carrier.

2. The device according to claim 1, **characterised in that** the lower part (7) comprises at least two support arms (32) the ends of which form or comprise the engagement points (31) and/or **in that** the lower part (7) or the support arms (32) have uprights, in particular pylons (2), arranged on them, the ends of which form or comprise the engagement points (31).

3. The device according to one of the preceding claims, **characterised in that** the tensioning element (21) comprises a cable, a rope, a wire, a chain or a flexible metal sheet and/or the tensioning element (21) is realised as a revolving rope.

4. The device according to one of the preceding claims, **characterised in that** the tensioning means (19) and/or the tensioning elements are adjustable in their length and/or the tensioning means (19) comprise rods, ropes, chains or flexible springs or are realised in the form of a screw, a turnbuckle, a welded seam or an adhesive layer.

5. The device according to one of the preceding claims, **characterised in that** the material (25) comprises flexible material and/or is realised in the form of several material segments separated from each other or pivotably connected with each other, wherein the material (25) and/or the material segments comprise reflective material, in particular one or more mirror segments.

6. The device according to one of the preceding claims, **characterised in that** the carrier (14) is rigidly constructed, in particular rigidly fixed to the lower part (7), wherein the length of the tensioning elements (21) or the length of the tensioning means (19) is adjustable, in particular by turnbuckles, springs or by stretching.

7. The device according to one of the preceding claims, **characterised in that** the tensioning means (19) are arranged, preferably essentially vertically, such that the tensile forces are exerted essentially vertically in the direction of the lower part (7), and/or **in that** the horizontal distances between each tensioning means (19) are essentially identical and/or **in that** the tensile force on each tensioning means is essentially identical.

8. The device according to one of claims 1 to 5 or 7, **characterised in that** the carrier (14) is moveable and a tensile force can be applied to each tensioning means (19) by the carrier.

9. The device according to claim 8, **characterised in**

**that**, in relation to the lower part (7), the carrier (14) is guided such that when the carrier moves in the direction of the lower part a tensile force identical for each tensioning means is exerted on the tensioning means (19).

10. The device according to one of the preceding claims, **characterised in that** the tensioning means (19) are formed of sections of an elongated, flexible tensile member, wherein deflecting points, in particular deflecting rollers (33), are provided on the tensioning element (21) and on the carrier (14) in order to allow the tensile member to be moveably supported, and the tensile member is fed alternatingly through the deflecting points on the tensioning element and the carrier, wherein preferably the horizontal projections of the distances between the deflecting points (33) along the tensioning element (21) are essentially identical.

11. The device according to one of the preceding claims, **characterised in that** the device is realised as a parabolic mirror or parabolic trough collector.

12. The device according to one of the preceding claims, **characterised in that** the distance of the engagement points (31) to each other and/or the length of the tensioning mean between the engagement points is adjustable.

13. A method for holding a material (25) comprising the following method steps:

(a) attaching an elongated, flexible tensioning element (21) which is connected to, comprises or carries the material (25), to at least two engagement points (31) of a lower part (7);
(b) pulling of tensioning means (19), which are attached to or formed by the tensioning element (21), in the direction of the lower part (7) with identical or varying tensile force such that the tensioning element (21) takes on a predetermined, in particular parabolic, shape, wherein each tensioning means (19) is connected to a carrier (14).

14. The method according to claim 13, **characterised in that** in order to set an opening width of the material (25), which comprises flexible material and/or is realised in the form of several material segments separated from one another or pivotably connected with one another, the engagement points (31) are moved in a preferably horizontal direction symmetrically to the lower part (7).

15. The method according to claim 13, **characterised in that** in order to set a focal length of the material (25), which comprises flexible material and/or is realised in the form of several material segments which are separated from one another or pivotably connected with one another, the length of the tensioning element (21) between the engagement points (31) is increased or decreased.

**Revendications**

1. Dispositif pour fixer un matériau (25), comprenant

a) une partie inférieure (7) comprenant au moins deux points d'attaque (31) ;
b) au moins un élément de serrage (21) longitudinal, lâche en flexion, qui est disposé suspendu entre les points d'attaque (31),
c) des moyens de traction (19) qui sont placés sur l'élément de serrage ou font partie de l'élément de serrage,
d) dans lequel l'élément de serrage est relié au matériau (25), le comprend ou le porte, et
e) le dispositif est ainsi conçu que tous les moyens de traction peuvent être tirés au même moment avec une force de traction identique ou différente en direction de la partie inférieure (7),

dans lequel
au moins un support (14) est prévu, dans lequel chaque moyen de traction (19) est relié au support.

2. Dispositif selon la revendication 1, **caractérisé en ce que** la partie inférieure (7) comprend au moins deux bras porteurs (32) dont les extrémités forment ou présentent les points d'attaque (31) et/ou que des montants, en particulier des pylônes (2) sont disposés sur la partie basse (7) ou sur les bras porteurs (32), dont les extrémités forment ou présentent les points d'attaque (31).

3. Dispositif selon l'une des revendications précédentes, **caractérisé en ce que** l'élément de serrage (21) comprend un câble, un fil de fer, un cordage, une chaîne ou une tôle flexible et/ou que l'élément de serrage (21) est conçu en tant que cordage périphérique.

4. Dispositif selon l'une des revendications précédentes, **caractérisé en ce que** les moyens de traction (19) et/ou l'élément de serrage sont réglables en longueur et/ou les moyens de traction (19) comprennent des tiges, des cordages, des chaînes ou des ressorts élastiques ou sont conçus sous forme d'une vis, d'un tendeur à vis, d'un cordon de soudure ou d'une couche de colle.

5. Dispositif selon l'une des revendications précédentes, **caractérisé en ce que** le matériau (25) comprend du matériau flexible et/ou est conçu sous forme de plusieurs segments de matériau séparés ou reliés de façon pivotante entre eux, dans lequel le matériau (25) et/ou les segments de matériau comprennent du matériau réfléchissant, en particulier un ou plusieurs segment(s) de miroir.

6. Dispositif selon l'une des revendications précédentes, **caractérisé en ce que** le support (14) est conçu en étant fixé de manière rigide, en particulier de manière rigide sur la partie inférieure (7), dans lequel la longueur des éléments de serrage (21) ou la longueur des moyens de traction (19) est réglable, en particulier par des tendeurs à vis, des ressorts et ou par dilatation.

7. Dispositif selon l'une des revendications précédentes, **caractérisé en ce que** les moyens de traction (19) sont ainsi disposés, de préférence essentiellement perpendiculairement, que les forces de traction sont exercées essentiellement perpendiculairement en direction de la partie inférieure (7) et/ou que les écarts horizontaux des moyens de traction (19) entre eux sont essentiellement identiques et/ou la force de traction sur chaque moyen de traction est essentiellement identique.

8. Dispositif selon l'une des revendications 1 à 5 ou 7, **caractérisé en ce que** le support (14) est mobile et chaque moyen de traction (19) peut recevoir une force de traction par le biais du support.

9. Dispositif selon la revendication 8, **caractérisé en ce que** le support (14) est ainsi conçu par rapport à la pièce inférieure (7) que lors d'un mouvement du support en direction de la partie inférieure, une force de traction identique pour chaque moyen de traction (19) est exercée sur les moyens de traction.

10. Dispositif selon l'une des revendications précédentes, **caractérisé en ce que** les moyens de traction (19) sont formés par des tronçons partiels d'une barre de coulée continue de traction flexible, longitudinale , dans lequel pour le placement mobile de la barre de coulée continue, des points de renvoi, en particulier des galets de renvoi (33) sont prévus sur l'élément de serrage (21) et sur le support (14) et la barre de coulée continue est dirigée en alternance sur l'élément de serrage et sur le support par les points de renvoi, dans lequel de préférence, les projections horizontales des écarts des points de renvoi (33) sont essentiellement identiques le long de l'élément de serrage (21).

11. Dispositif selon l'une des revendications précédentes, **caractérisé en ce que** le dispositif est conçu en tant que miroir parabolique ou miroir concentrateur cylindre-parabolique.

12. Dispositif selon l'une des revendications précédentes, **caractérisé en ce que** l'écart des points d'attaque (31) entre eux et/ou la longueur du moyen de traction entre les points d'attaque est réglable.

13. Procédé de fixation d'un matériau (25), comprenant les étapes de procédé suivantes :

a) application d'un élément de serrage longitudinal, lâche en flexion (21) qui est relié au matériau (25), le comprend ou le porte entre au moins deux points d'attaque (31) d'une partie inférieure (7) ;
b) étirage de moyens de traction (19) appliqués sur l'élément de serrage (21) ou formés par l'élément de serrage, en direction de la partie inférieure (7) avec une force de traction identique ou différente, de telle sorte que l'élément de serrage (21) adopte une forme prédéfinie, en particulier parabolique, dans lequel chaque moyen de traction (19) est relié à un support (14).

14. Procédé selon la revendication 13, **caractérisé en ce que** pour régler une largeur d'ouverture du matériau (25), lequel comprend du matériau flexible et/ou est conçu sous forme de plusieurs segments de matériau séparés ou reliés de façon pivotante entre eux, les points d'attaque (31) sont poussés dans un sens de préférence horizontal symétrique à la partie inférieure (7).

15. Procédé selon la revendication 13, **caractérisé en ce que** pour régler une focale du matériau (25), lequel comprend du matériau flexible et/ou est conçu sous forme de plusieurs segments de matériau séparés ou reliés de façon pivotante entre eux, la longueur de l'élément de serrage (21) est augmentée ou réduite entre les points d'attaque (31).

Fig. 1

Fig. 2a

Fig. 2b

Fig. 2c

Fig. 2d

Fig. 2e

Fig. 2f

Fig. 2g

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2010314509 A1
- WO 2011059062 A1
- KR 101004108 B1
- CA 662032 A
- US 3211163 A